# EUROPEAN PATENT APPLICATION

(11) **EP 2 765 720 A1**
(43) Date of publication of application: **13.08.2014**
(21) Application number: 13154191.4
(22) Date of filing: 06.02.2013
(51) Int. Cl.: H04B 13/00, H04L 9/00

(54) **Body coupled communication system**

(71) Applicant: Koninklijke Philips N.V., 5656 AE Eindhoven (NL)
(72) Inventor: Ouzounov, Sotir F., 5600 AE Eindhoven (NL); Van Langevelde, Ronald, 5600 AE Eindhoven (NL); Abbo, Anteneh A., 5600 AE Eindhoven (NL); Wartena, Frank, 5600 AE Eindhoven (NL); Rutten, Peter J. H., 5600 AE Eindhoven (NL)
(74) Representative: Damen, Daniel Martijn

(57) **Abstract**

A body communication system (100) is provided which comprises a first device (110) and a second device (130). The first device (110) comprises a first body coupled communication interface (114) for forming a body communication network (170) via a body transmission channel (160) following a body of a user (150) when the first body coupled communication interface (114) is in a direct vicinity of the body of the user (150). The second device (130) comprises a second body coupled communication interface (134) for forming the body communication network (170) with the first device (110) via the body transmission channel (160) when the second body coupled communication interface (134) is in the direct vicinity of the user (150). The first and second body coupled communication interfaces (114, 134) communicate information with each other via the body transmission channel (160). The body coupled communication system (100) is configured to provide additional security to the user (150) of the body coupled communication system (100) to prevent misuse of the first device (110) or the second device (130).

## Description

### FIELD OF THE INVENTION

The invention relates to body coupled communication systems and devices for use in such body coupled communication devices.

### BACKGROUND OF THE INVENTION

Body-coupled communication (BCC) allows exchange of information between devices that are located at or in close proximity of a body of, for example, a user. The BCC signals are transmitted via the body instead of via a wire or instead of via radio signals. The body may be in direct contact with an electrode of the device which uses BCC or the body may be in the direct vicinity of an antenna of the device which uses BCC because capacitive coupling may also be used for BCC. BCC has some specific advantages, such as: the amount of energy used by body-coupled communication is relatively low and the signals of the body-coupled communication can only be received (and transmitted) by devices which are in the direct vicinity of the body which forms the transmission channel of the body-coupled communication. Thereby the coverage area of the body-coupled communication is confined.

BCC has been proposed as a candidate for the physical layer of body area networks (BANs), see for example the IEEE 802.15.6 BAN standardization. Body coupled communication has also been acknowledged by several authors as a good candidate for Personal Area Networks (PANs) in so far the devices of the PAN are worn or kept by the user in the close proximity of his body. The fact that the signals of BCC are confined to a relatively small area around the body of the user results, up to some degree, in a secure communication technology because one can only misuse the communication when one is able to bring a device in the close proximity of the body which forms the transmission channel of the BCC. However, as soon as a device is brought into the close proximity of the body of the user, the BCC communication may still be overheard. Furthermore, as soon as a BCC enabled device is stolen, the device may be misused and information on the device may be obtained by a malicious party.

### SUMMARY OF THE INVENTION

It is an object of the invention to provide a more secure communication system which uses body-coupled communication.

The invention provides a body coupled communication system. Advantageous embodiments are defined in the dependent claims.

A body communication system in accordance with the first aspect of the invention comprises a first device and a second device. The first device comprises a first body coupled communication interface for forming a body communication network via a body transmission channel following a body of a user when the first body coupled communication interface is in a direct vicinity of the body of the user. The second device comprises a second body coupled communication interface for forming the body communication network with the first device via the body transmission channel following the body of the user when the second body coupled communication interface is in the direct vicinity of the body of the user. The first body coupled communication interface and the second body coupled communication interface are configured to communicate information with each other via the body transmission channel. The direct vicinity is defined as a maximum distance at which, respectively, the first device and the second device are capable of transmitting and/or receiving information via the body transmission channel. The maximum distance is a distance between the body of the user and, respectively, the first body coupled communication interface and the second body coupled communication interface. The body coupled communication system is configured to provide additional security to the user of the body coupled communication system to prevent misuse of the first device or the second device.

The first body coupled communication interface and the second body communication interface are configured to form the body communication network. This basically means that the physical communication is performed via the body transmission channel and that the respective body coupled communication interfaces apply a network protocol to the communication between the devices. In particular, when more than two devices are present in the body communication network, an addressing scheme may be used to send pieces of information to the correct device. Such a network protocol may comprise a "light weight" option for the situation that only two device are present in the body communication network. Such a "light weight" option may omit an addressing scheme. The capability of the respective body coupled communication interfaces to form a network may also include a discovery protocol to detect whether new active devices with a body coupled communication interface became close to the body of the user such that they may become a new member of the body communication network.

It is to be noted that the first device and the second device are both members of the body communication network when the body of the user is simultaneously in the direct vicinity of the first body coupled communication interface and of the second body coupled communication interface.

Optionally, the maximum distance (of the direct vicinity) is closer than 10 cm, or closer than 5 cm. Optionally, the maximum distance is closer than 2 cm. In an optional embodiment of the invention, direct vicinity means that the user touches the first and the second body coupled communication interface.

Optionally, the first device is configured to detect, after the body communication network being formed, whether the second device is still present in the body communication network. The first device alarms the user when it has been detected that the second device is not anymore present in the body communication network. As discussed previously, the devices can only be a member of the body communication network when they are in the close proximity of the body of the user. Thus, when someone is stealing the second device, the second device is not anymore a member of the body communication network within a relatively short time. The sudden absence of the second device may be detected by the first device and an alarm may be generated (e.g. by means of an audible signal, a visual signal or vibration signal). Thus, the user of the first device may be informed about the absence of the second device within a relatively short period of time which provides the user with the opportunity to collect the second device before it is too late. This embodiment is also very helpful to prevent the loss of the second device when the user is about to lose the second device. Thus, this embodiment prevents that the second device becomes in the hands of another (non-authorized) user and misuse is prevented.

Optionally, the first device is configured to detect on a regular basis whether the second device is still present in the body communication network.

Optionally, the first device is configured to detect, after the body communication network is formed, whether the first device is still able to communicate via the body communication network. The first device is configured to alarm the user when it has been detected that the first device is not anymore able to communicate via the body communication network. In this optional embodiment, measures are provided which alarm the user when someone is stealing the first device or when the user is about to lose the first device. Specific forms of alarming the user have been discussed previously.

Optionally, the first device is configured to detect on a regular basis whether the first device is still able to communicate via the body communication network.

Optionally, the second device is configured to detect, after the body communication network is formed, whether the first device is still present in the body communication network, and the second device alarms the user when it has been detected that the first device is not anymore present in the body communication network. Optionally, the second device is configured to detect whether the second device is able to communicate via the body communication network, and the second device alarms the user when it has been detected that the second device is not anymore able to communicate via the body communication network. These optional embodiments are similar to the previously discussed embodiments of the first device and provide the same benefit as the previously discussed embodiments of the first device.

Optionally, the first device and the second device apply a polling protocol within the body communication network to detect whether one of the first device or the second device is still present in the body communication network and/or to detect whether one of the first device or the second device is still able to communicate via the body communication network. By applying a polling protocol the device contact each other on a regular basis is an advantageous way to detect whether one of the devices is not anymore in the body communication network or is not anymore able to communicate via the body communication network. When a polling request is not answered, it may be concluded that a specific device is not anymore in the body communication network and/or that a specific device is not anymore able to communicate with other devices in the body communication network. Polling protocols often define that the polling must be executed on a regular basis, which provides a more reliable detection of the absence of a device or that one device can not anymore communicate via the body communication device. The polling protocol may also define that each device should poll all other devices on a regular basis resulting in a more reliable polling mechanism.

Optionally, the first device at least temporarily blocks its operation when it has been detected that the first device is not anymore able to communicate via the body communication network. When the second device is also capable is detecting whether it is able to communicate via the body communication network, each one of the first device and the second device are configured to at least temporarily block its operation when it has been detected that the respective first device or second device is not anymore able to communicate via the body communication network. This optional embodiment strongly prevents misuse. It means that the devices only operate when they are in the close proximity of the body of the user and when they are part of the body communication network. As soon as the devices are lost or stolen, they are useless and, thus, worthless for malicious parties.

Optionally, the first device comprises an additional communication interface for communication with other devices in another network and the first device is configured to communicate with the second device in the body communication network and to communicate with other devices in the another network via the additional communication interface. The second device is configured to communicate only with devices of the body communication network. Thus, the first device is within the body communication network the only device which is capable of communicating with the another network and other devices of the body communication network do not have direct access to the another network. Thus, the first device is a sort of gateway to the another network and, as such, the first device may apply additional measures to protect the devices in the body coupled network for attacks from the another network, and the first device may apply additional protocols to prevent that the devices of the body communication network contact devices of the another network in an unauthorized manner. Such protocols and measures are well-known in the field of gateways. Furthermore, when the second device is stolen or lost, its use is relatively limited because it can only be used in the body communication network and can not be used together with the another network. Thus, misuse of the second device is limited. In an example, the first device is a mobile phone which provides internet access via a wireless connection and also has the first body coupled communication interface via which it is connected to other devices in the body coupled network. The mobile phone can prevent that malicious data transfers happen between the another network and the devices of the body coupled communication network.

Optionally, the first device is configured to allow the second device to communicate with the other devices in the another network via the additional communication interface and the second device is configured to communicate with the other devices in the another network via the first device. According to this embodiment, although the second device does not have directly access to the another network, it may contact devices in the another network via the first device. As discussed previously, the first device fulfills the role of a gateway and may apply security protocols which may block malicious attacks and may block unauthorized communication.

Optionally, the body coupled communication system comprises a third device. The third device comprises a third body coupled communication interface and an authenticator. The third body coupled communication interface is meant for becoming a part of the body coupled network with the first device and the second device when the third body coupled communication interface is in the direct vicinity of the body of the user. The authenticator authenticates a user in dependence of a received key. The first device comprises a first key storage for storing a first portion of the key and the first body coupled communication device transmits the first portion of the key to the third device when the first device and the third device are a member of the body communication network. The second device comprises a second key storage for storing a second portion of the key. The second body coupled communication interface transmits the second portion of the key to the third device when the second device and the third device are member of the body coupled communication network. The authenticator is configured to receive the first portion and the second portion of the key from the third body coupled communication interface and the authenticator combines the received first portion of the key with the received second portion of the key.

In this optional embodiment, a user has to authenticate himself at the third device and this must be done with a key. However, the key is not stored in a single device of the body coupled network, but is subdivided into (at least) two portions and stored at two different devices of the body coupled network. Thus, when one of the first device and the second device are stolen or lost, a malicious user is not able to authenticate on behalf of the user because another one of the first device and the second device is also needed to be able to authenticate at the third device on behalf of the user. Thus, the security of the authentication is increased because of the spreading of the portions of the key over different devices.

The subdivision of the key into the first portion and the second portion may be such that the first n digits are stored in the first device and the second n digits are stored in the second device. Another subdivision may be that the odd digits are stored in the first device and that the even digits are stored in the second device.

The key may be a secure number which is used in, for example, encryption and decryption protocols. The key may also be a publicly known key. The key may also be an identification number. The key may also be a number which is the result of encrypting another key or identification number. In the context of the invention it is only relevant that the authenticator at least needs the key to authenticate the user and that the key is subdivided into portions and stored among different devices of the body communication network. As discussed previously in this application, the body communication network provides additional security because the signals transmitted by the body communication network can only be intercepted by devices which are in the close proximity of the body of the user.

In an embodiment, the respective key portions are only transmitted to the third device when the first device, the second device and the third device are member of the body communication network.

Optionally, the first portion and the second portion of the key form the complete key. However, in other embodiments, the key is subdivided in more than two portions and to obtain the complete key, all portions of the key must be obtained. This is, for example, useful when a user has still to provide a portion of the key by typing a number at a keybord, or when a fourth device is present in the body communication network and when a third portion of the key is provided by such a fourth device.

Optionally, the third device is one of a payment terminal, a cash dispenser, an identity controlled access device, a computer, a computer network interface or a console. In these possible embodiments of the third device, security is a very important issue and the third device must be sure that the user, who is in the direct vicinity of its third body coupled communication interface, is correctly authenticated. The body coupled communication system according to the embodiments provide an additional level of security because the user must have the first device and the second device in the close proximity of his body, and when one of the first device and the second device is stolen or lost, only a portion of the key is provided to potential malicious parties.

Optionally, one of the first device and the second device is a bank card, a debit card or a credit card and the another one of the first device and the second device is not a bank card, is not a debit card and is not a credit card. Especially for financial transactions, a relatively high level of security is required and bank card, debit cards and/or credit cards today comprise integrated circuits which may fulfill the role of first device or second device. Also the user associates such cards with payment transactions and, thus, it is an intuitive reaction to take the bank card or the credit card in one's hand when a financial transaction must be performed. Or, when paying, it is an intuitive reaction to hold a wallet in one of the hands, which comprises the bank, debit or credit card, thereby bringing the band, debit or credit card into the close vicinity of the body of the user. However, in order to introduce a higher circuitry level, it is logical that the another one of the devices is not a bank card, a debit card, or a credit card, because it is an unexpected device for storing a portion of the key. The another one of the devices might be a mobile phone, a smart phone, a watch, a media player in a pocket of a coat, etc.

Optionally, the key is a Personal Identification Number (PIN) of the user. The PIN is a key which is often used in financial transaction, for example, when the user pays at a payment terminal or when a user wants to receive cash from a cash dispenser. The PIN is a secret key which a user may not provide to other people. Thus, when the PIN is distributed across two devices, the probability that the PIN ends up, as the result of a theft or a loss, in the hands of a malicious party is reduced.

Optionally, the first device and the second device are configured to communicate with each other in a secure way when each one of the first device and the second device comprises a correct encryption key for encrypting and decrypting the information being communicated between the first device and the second device. Such secure communication prevents that signals that are intercepted from the body communication network by a malicious device can be interpreted because the malicious device can not decrypt the encrypted information. It is to be noted that known encryption and decryption schemes can be used and that the schemes may use symmetric security keys, asymmetric securities keys, public and private keys, etc. Thus, the first device and the second device do not necessarily use the same encryption / decryption key.

Optionally, one of the first device and the second device is a master device in the body communication network. A master device is a device which controls the body coupled network and which is more important in the body coupled network than the other devices of the body coupled network. Such a central (master) control device may implement several securities polices which provide additional security, and such a central (master) control device may control which devices are allowed to join the body communication network and may control the communication between the devices of the body communication network.

Optionally, each one of the first device and the second device comprises an identity number storage for storing an identity value belonging to, respectively, the first device and the second device. The identity value is used in the communication via the body communication network, for example, to identify a source and a target of a specific data communication package.

These and other aspects of the invention are apparent from and will be elucidated with reference to the embodiments described hereinafter.

It will be appreciated by those skilled in the art that two or more of the above-mentioned options, implementations, and/or aspects of the invention may be combined in any way deemed useful.

Modifications and variations of the body coupled communication system, which correspond to the described modifications and variations of the system, can be carried out by a person skilled in the art on the basis of the present description.

### BRIEF DESCRIPTION OF THE DRAWINGS

In the drawings:
Fig. 1 schematically shows an embodiment of a body coupled communication system according to the first aspect of the invention,
Fig. 2 schematically shows another embodiment of a body coupled communication system,
Fig.3 schematically shows a further embodiment of a body coupled communication system, and
Fig. 4 schematically shows another further embodiment of a body coupled communication system.

It should be noted that items denoted by the same reference numerals in different Figures have the same structural features and the same functions, or are the same signals. Where the function and/or structure of such an item have been explained, there is no necessity for repeated explanation thereof in the detailed description.

The Figures are purely diagrammatic and not drawn to scale. Particularly for clarity, some dimensions are exaggerated strongly.

### DETAILED DESCRIPTION OF THE EMBODIMENTS

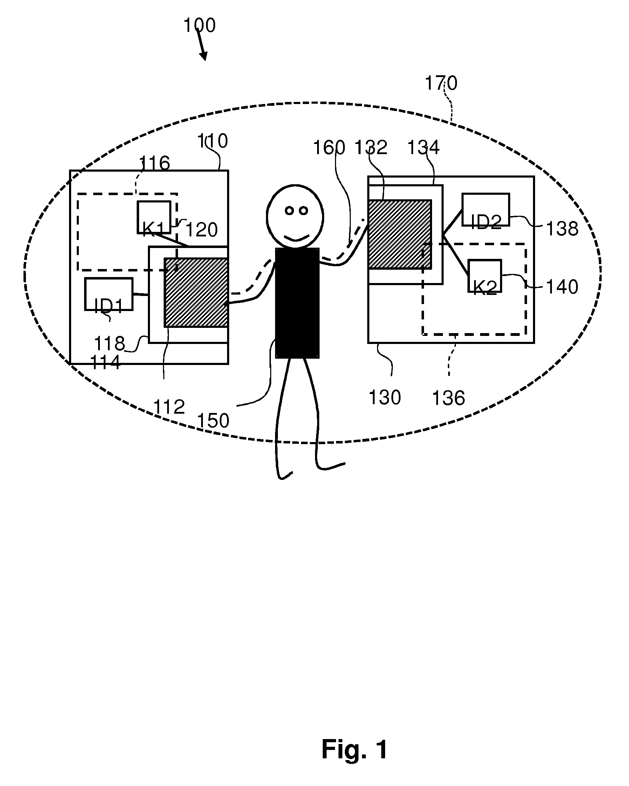

A first embodiment is shown in Fig. 1. Fig. 1 schematically shows an embodiment of a body coupled communication system 100 according to the first aspect of the invention. The body coupled communication system 100 comprises a first device 110 and a second device 130. The first device 110 comprises a first body coupled communication interface 114 for forming a body communication network 170 via a body transmission channel 160 following a body of a user 150 when the first body coupled communication interface 114 is in the direct vicinity of the body of the user 150. The second device 130 comprises a second body coupled communication interface 134 for forming the body coupled communication network 170 with the first device 110 via the body transmission channel 160 following the body of the user 150 when the second body coupled communication interface 134 is in the direct vicinity of the body of the user 150. The first body coupled communication interface 114 and the second body coupled communication interface 134 communicate information with each other via the body transmission channel 160. The direct vicinity is defined as a maximum distance at which, respectively, the first device 110 and the second device 130 are capable of transmitting and/or receiving information via the body transmission channel 160. The maximum distance is a distance between the body of the user 150 and, respectively, the first body coupled communication interface 114 and the second body coupled communication interface 134. At least one of the first device 110 and the second device 130 comprises a means 116, 136 which is configured to provide additional security to a user 150 of the body coupled communication system 100 to prevent misuse of the first device 110 or the second device 130.

The first body coupled communication interface 114 and/or the second body coupled communication interface 134 may each comprises an electrode 112, 132 or an antenna. When the user 150 touches the electrode 112, 132, information may be transmitted via the body of the user 150 because a capacitive, direct or ohmic contact with the body is obtained. However, to communicate information via the body of the user 150 it is not necessary that the user touches the electrode 112, 132. If the body is in the direct vicinity, for example, within 10 cm from the electrode 112, 132, communication may be possible via capacitively coupled signals. When the user does not have to touch the electrode 112, 132, the term "antenna" is more appropriate. In another embodiment, the distance between the body of the user 150 and the respective first and second body coupled communication interfaces 114, 134 must be smaller than 5 cm before communication via the body of the user and the respective first and second body coupled communication interfaces 114, 134 is possible. In yet another embodiment, the distance between the body of the user 150 and the respective first and second body coupled communication interfaces 114, 134 must be smaller than 2 cm before communication via the body of the user and the respective first and second body coupled communication interfaces 114, 134 is possible.

Details of body coupled communication technologies may be found in other documents, such as, for example, US patent 6211799 or US patent 5914701. The detection that the user 150 touches the respective body coupled communication interfaces 116, 134, or the detection that the user 150 is in the direct vicinity of the respective body coupled communication interfaces 116, 134 may be performed by measuring sudden changes in specific characteristics of electrodes 114, 132, or by detecting, with a specific additional element, the presence of the body of the user 150. Thus, the body of the user is the physical medium along which signals are communicated. In the context of the invention different protocols may be used to transmit information long this physical medium and different protocols may be used to access this medium with different devices (for example, time division multiplexing, or, alternatively, frequency division multiplexing, etc.).

The first body coupled communication interface 114 and the second body communication interface 134 are configured to form the body communication network 170. This basically means that the physical communication is performed via the body transmission channel 160 and that the respective body coupled communication interfaces 114, 134 apply a network protocol to the communication between the devices. In particular, when more than two devices are present in the body communication network 170, an addressing scheme may be used to send information to the correct device. Such a network protocol may comprise a "light weight" option for the situation that only two device are present in the body communication network 170. Such a "light weight" option may omit an addressing scheme when the total number of devices present in the body communication network 170 is smaller than three. The capability of the respective body coupled communication interfaces to form a network may also include a discovery protocol to detect whether new active devices with a body coupled communication interface became close to the body of the user 150 such that they may become a new member of the body communication network. The respective devices 110, 130 or the respective body coupled communication interfaces 114, 134 may transmit a beacon signal when they are in the direct vicinity of the body of the user 150. The beacon signal indicates the presence of the device and may comprise information related to "how to contact the device which had transmitted the beacon signal". The respective devices 110, 130 or the respective body coupled communication interfaces 114, 134 may be configured to detect such beacon signals and reply to the beacons signal with a request to set up a body communication network 170.

In an embodiment, each one of the means 116, 136 for providing additional security may comprise a respective key storage 120, 140 for storing a respective security key K1, K2. According to this optional embodiment, the first device 110 and the second device 130 are configured to communicate with each other in a secure way when each one of the respective device 110, 130 comprises such a security key K1, K2. The security keys K1, K2 are used to securely communicate information between the first device 110 and the second device 130 via the body communication network 170. The first device 110 and the second device 130 are configured to encrypt information to be transmitted with the respective keys K1, K2 and to decrypt received information with the respective keys K1, K2. Thus, each one of the first device 110 and second device 130 is configured to apply an encryption /decryption scheme to the information to be transmitted via the body communication network 170. The encryption / decryption scheme may define that symmetrical or asymmetrical keys K1, K2 are used and/or the encryption / decryption scheme may define that one of the keys K1, K2 is a public key, while the other one of the keys K1, K2 is a private key. It is to be noted that the respective key storages 120, 140 may be non-volatile memory which may be programmed with the value of the respective keys K1, K2. The key storage 120, 140 may also be a piece of hardware which has the values of the respective keys permanently fixed in its internal design.

According to another optional embodiment, one of the first device 110 and the second device 130 is a master device in the body coupled communication network. A master device is a device which controls the body coupled network and which has more privilege in the body coupled network than the other devices of the body coupled network. Such a central (master) control device may implement several securities polices which provide additional security, and such a central (master) control device may control which devices are allowed to join the body communication network and may control the communication between the devices of the body communication network.

According to another optional embodiment, each one of the first device and the second device comprises an identity number storage 118, 138 for storing an identity value ID1, ID2 belonging to, respectively, the first device 110 and the second device 130. The identity value is used in communication via the body communication network 170. The identity value ID1, ID2 may be used by the respective device 110, 130 to identify themselves when becoming a member of the body communication network 170 and/or may be used in data packages that are transmitted via the body communication network 170 as a destination and/or source address identification. It is to be noted that the respective identity number storages 118, 138 may be non-volatile memory which may be programmed with the value of the respective identity values ID1, ID2. The identity number storages 118, 138 may also be a piece of hardware which has the values of the respective identity values ID1, ID2 permanently fixed in its internal design.

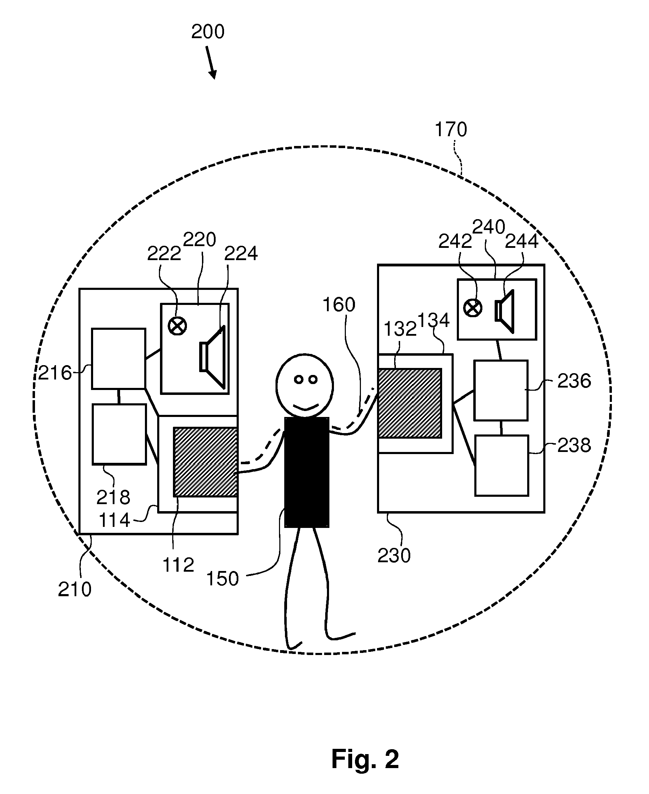

Fig. 2 schematically shows another embodiment of a body coupled communication system 200. At least one of the first device 210 and the second device 230 comprises a detector 218, 238 which is coupled to the respective body coupled communication interface 114, 134. A device 210, 230 which comprises a detector 218, 238 also comprises a respective alarm generator 220, 240 which is directly or indirectly coupled to the respective detector 218, 238. The detector 218 of the first device 210 is configured to detect whether the second device 230 is still present in the body communication network 170. The detector 238 of the second device 230 is configured to detect whether the first device 210 is still present in the body coupled communication network 170. When the detector 218 of the first device 210 detects that the second device 230 is not any more a member of the body coupled communication network 170, the detector 218 provides a signal to the alarm generator 220 of the first device 210 and the alarm generator 220 generates an audible or visual stimulus by means of a light source 222 or loudspeaker 224 such that the user is alarmed that the second device 230 is not anymore in the body coupled network 170. When the detector 238 of the second device 230 detects that the first device 210 is not any more a member of the body coupled communication network 170, the detector 238 provides a signal to the alarm generator 240 of the second device 230 and the alarm generator 240 generates an audible and/or visual stimulus by means of a light source 242 and/or loudspeaker 244 such that the user 150 is alarmed that the first device 210 is not anymore in the body coupled network 170.

The detectors 218, 238 may be configured to detect on a regular basis whether, respectively, the second device 230 and the first device 210 are still a member of the body communication network 170. For example, the detectors 218, 230 try to detect at least every minute whether another device is still present in the body communication network 170. In another embodiment, the detectors 218, 230 try to detect at least every 20 seconds whether another device is still present in the body communication network 170. In a further embodiment, the detectors 218, 230 try to detect at least every 5 seconds whether another device is still present in the body communication network 170.

The detectors 218, 238 may cooperate with the respective first and second body coupled communication interface 114, 134 to apply a polling scheme. In a polling scheme one device sends a polling message to another device and when the another device receives the polling message it confirms the reception with a confirmation message. Thus, when the first device 210 transmits a polling message to the second device 230 and no confirmation message is received, the second device 230 is most probably not anymore a member of the body communication network 170. In an embodiment, the detectors 218, 238 decide that another device is not anymore in the network when two consecutive polling message to the another device are not answered by the another device.

In an additional optional embodiment, at least one of the first device 210 and the second device 230 comprises a respective connection detector 216, 236 which detects whether the respective first device 210 or second device 230 is still connected to the body communication network 170. The connection detectors 216, 236 are coupled to the respective first body coupled communication interface 114 and the second body coupled communication interface 134 and to the respective alarm generators 220, 240. The connection detectors 216, 236 are configured to detect whether the device 210, 230 to which they belong is still connected to the body communication network 170. When the connection detectors 216, 236 detect that the device 210, 230 to which they belong is not anymore connected to the body communication network 170, a signal is provided to the respective alarm generators 220, 240 such that the user of the respective devices 210, 230 receive an audible or visual alarm that the respective device 210, 230 is not anymore connected to the body communication network 170. In an embodiment, the connection detectors 216, 236 may detect on a regular basis whether the device 210, 230 to which they belong is still connected to the body communication network 170. Regular means: at least every 60 seconds, or at least every 20 seconds, or at least every 5 seconds.

For example, in line with the previously discussed embodiments of the detectors 218, 238 which detect whether another device is still a member of the body communication network 170, the connection detectors 216, 236 may apply a polling scheme. When, subsequently, the connection detectors 216, 236 do not receive any confirmation message from any other device in the body communication network 170 during a predetermined period of time, the connection detectors 216, 236 may decide that the connection with the body communication network 170 has been lost. In another embodiment, a register in the respective first and second body coupled communication network interfaces indicate whether there was recently communication with another device of the body communication network 170 and the connection detectors 216, 236 regularly read this register to detect that the connection with the body communication network 170 has been lost.

In an embodiment, the respective connection detectors 216, 236 are configured to block all operations of, respectively, the first device 210 and the second device 230 when the connection detectors 216, 236 have detected that the device to which they belong is not anymore connected to the body communication network 170. In an embodiment, not all operations are blocked, but only the user interface is blocked, which means no user input can be received and that no output is generated to the user (except an alarm generated by the respective alarm generators 220, 240). In yet a further embodiment, the first device 210 and/or the second device 230 may block their operation when it has been detected that the device is not anymore part of the body communication network 170 until the user manually unblocks the respective first and second device 210, 230. In another embodiment, the unblocking of the operation of the first and/or second device 210, 230 may be performed automatically when the first and/or second device 210, 230 automatically reconnect to the (or another) body communication network.

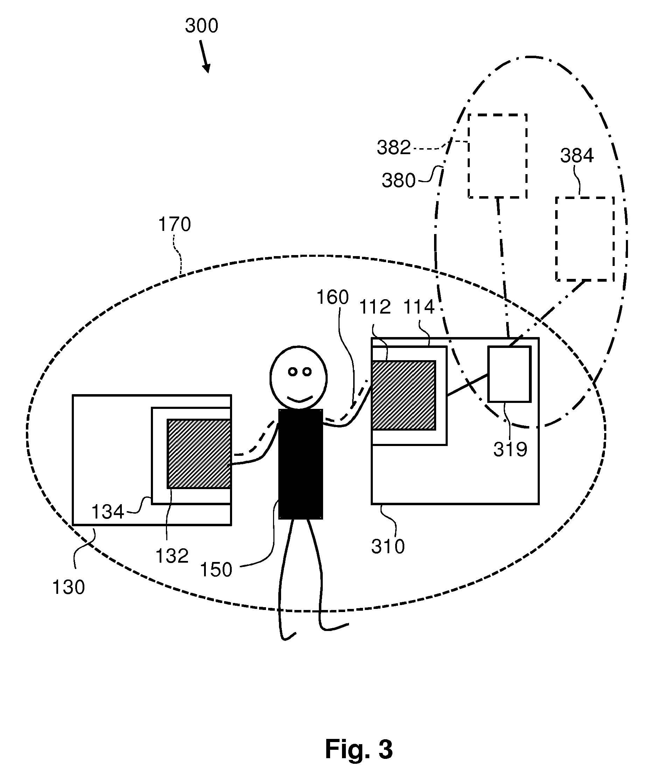

Fig.3 schematically shows a further embodiment of a body coupled communication system 300. The body coupled communication system 300 comprises a first device 310 and a second device 130 in accordance with previously discussed embodiments of the second device (for example, discussed in the context of Fig. 1). In an embodiment, the second device 130 is, in addition to previously discussed embodiments, only limited with respect to its communication capabilities. Such a limited second device is configured to only communication with the first device 310 via the body communication network 170.

The first device comprises in addition to the first body coupled communication device 114, an additional communication interface 319 for communication with other devices 382, 384 in another network 380. It is to be noted that, in an embodiment, the another network does not use a body transmission channel such as the body communication network 170 does. Thus, the first device 310 is configured to communicate with devices 130 within the body communication network 170 and with devices 382, 384 in the another network 380. Thus, the first device 310 fulfills a role of a sort of gateway between the body communication network 170 and the another network 380. The first device 310 may be configured to route data packets from the another network, which it receives at its additional communication interface 319, towards devices in the body communication network 170, and/or to route data packets from the body communication network 170, which it receives at its first body coupled communication interface 114, towards devices in the another network 380. The second device 130 may be configured to communicate with devices in the another network 380 via the first device 310.

In this specific role as a gateway device between the body communication network 170 and the another network, 380, the first device 310 may apply security / fire-wall protocols to block malicious attacks from the another network 380 and the first device 310 may apply security / filter / fire-wall protocols which control all data and information transfer between devices in the another network 380 and the body communication network 170, for example, only trusted data transfers are allowed between the body communication network 170 and the another network 380, and vice versa.

In an embodiment, in line with a previously discussed embodiment, the information transmitted between the first device 130 and the second device 310, and vice versa, is encrypted with an encryption protocol which is based on one or more security keys. More information is provided in the context of Fig. 1.

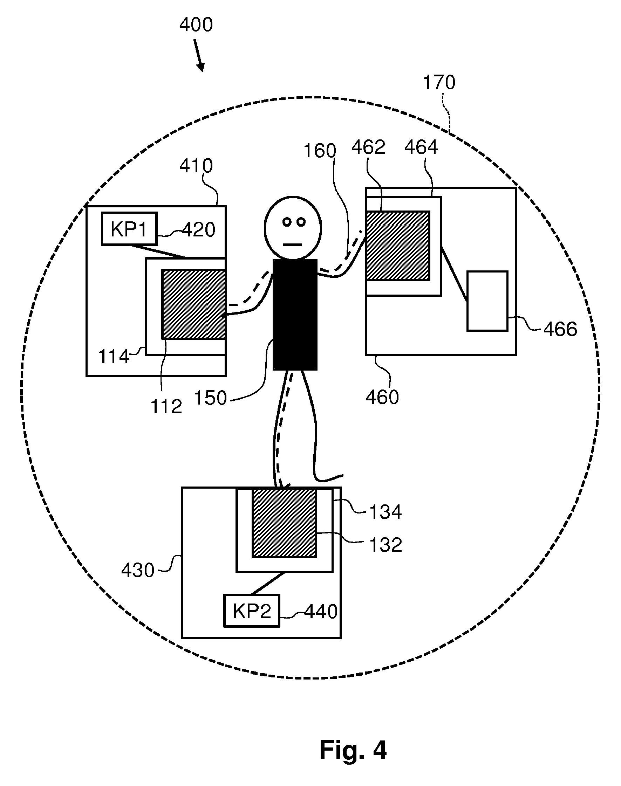

Fig. 4 schematically shows another embodiment of a body coupled communication system 400. The body coupled communication system 400 comprises a first device 410, a second device 430 and a third device 460. The first device 410 and the second 430 are similar to previously discussed embodiments of the first device and the second device (such as, for example, in the context of Fig. 1). In addition to previously discussed embodiments, each one of the first device 410 and the second device 430 comprises, respectively, a first key storage 420 and a second key storage 440. The first key storage 420 of the first device 410 is capable of storing a first portion KP1 of a key. The second key storage 440 of the second device 430 is capable of storing a second portion KP2 of a key. It is to be noted that the respective first and second key storages 420, 440 may be non-volatile memory which may be programmed with the value of the respective keys portions KP1, KP2. The first and second key storage 420, 440 may also be a piece of hardware which has the values of the respective key portions KP1, KP2 permanently fixed in its internal design.

The third device 460 comprises a third body coupled communication interface 464 for becoming a member of the body coupled communication network 170 with the first device 410 and the second device 430 when the third body coupled communication interface 464 is in the direct vicinity of the body of the user 160. The term "direct vicinity" and embodiments relating to becoming a member of the body communication network 170 have been discussed previously. The third body coupled communication interface 464 is configured to communicate information with, respectively, the first device and the second device via the body transmission channel 160. The third device 460 also comprises an authenticator which is configured to authenticate a user in dependence of a received key. Thus, when a user 150 tries to identify himself to the third device 460 and the authenticator 466 checks whether the received key matches information related to the user. When there is a match, the user 150 is authenticated by the authenticator 466 and when the user is positively identified subsequent actions may start (depending on the specific function of the third device 460). The authenticator 466 may have an internal database in which information with respect to trusted users is stored and in which information with respect to their keys is stored. Comparing a received key with information in the database is the basis for taking an authentication decision.

In addition to previously discussed embodiments of the first device 410, the first body coupled communication interface 114 is also configured to transmit the first portion KP1 of the key, which it obtains from the first key storage 420, towards the third device 460 via the body communication network 170. This transmission of the first portion KP1 of the key is performed when the first device 410 detects that the third device 460 has become a member of the body communication network 170. In an embodiment, the first device 410 receives a message when the third device 460 becomes a new member of the body communication network 170 from a master device in the network. Or the network formation protocol, which is (also partly) executed by the first body coupled communication interface 114, is aware of the presence of the third device 460. Or, alternatively, the third device 460 invites the first device 410 by means of a message to transmit the first portion KP1 of the key.

In addition to previously discussed embodiments of the second device 430, the second body coupled communication interface 134 is also configured to transmit the second portion KP2 of the key, which it obtains from the second key storage 440, towards the third device 460 via the body communication network 170. This transmission of the second portion KP2 of the key is performed when the second device 430 detects that the third device 460 has become a new member of the body communication network 170. In an embodiment, the second device 430 receives a message when the third device 460 becomes a member of the body communication network 170 from a master device in the network. Or the network formation protocol, which is (also partly) executed by the second body coupled communication interface 134, is aware of the presence of the third device 460. Or, alternatively, the third device 460 invites the second device 430 by means of a message to transmit the second portion KP2 of the key.

The authenticator 466 is configured to combine the received first portion KP1 of the key with the received second portion KP2 of the key. In an embodiment, the combination of the first portion KP1 of the key and the second portion KP2 of the key form the (complete) key. In an embodiment, the combination of the first portion KP1 of the key and the second portion KP2 of the key together form a relatively large portion the key, which means that still another portion may be needed to form the complete key but that the combination of the first portion KP1 and the second portion KP2 forms more than half of the (complete) key. When a relatively large portion of the key is received by the third device 460, it might be that the authenticator 466 is still able to authenticate the user 150, especially when the key comprises redundancy. However, it should be impossible for the authenticator 466 to authenticate the user 150 when only the first portion KP1 of the key is received or when only the second portion KP2 of the key is received. In another embodiment, there is also a third portion of the key which is stored on a fourth device which transmits this portion to the third device when it becomes part of the body communication network 170. In yet another embodiment, there is also a third portion of the key which is kept secret by the user 150 and the user provides manually provides the third portion of the key to the third device 460.

The subdivision of key into a first portion and the second portion may be based on splitting the key into two portion just by distributing the digits to the different portions. A sequence of digits of the key may form the first portion KP1 of the key and another sequence of digits of the key may form the second portion KP2 of the key. In another embodiment consecutive digits of the key are distributed to different key portions KP1, KP2. In yet another embodiment, the key is subdivided into two portions of the key by calculating two values with one or more formulas and the combining is also performed on basis of a calculation. The combining calculation performs a reverse operation compared to the splitting calculation.

In an embodiment, the third device 460 is one of a payment terminal, a cash dispenser, an identity controlled access device, a computer, a computer network interface or a console. For example, when the third device 460 is a payment terminal, after authorizing the user, the payment is continued and/or completed. When the third device 460 is a cash dispenser, in response to positively identifying the user, the requested money is dispensed. When the third device 460 is an identity controlled device and when the user is authorized, access is provided by the device by opening, for example, a door.

In an embodiment, one of the first device 410 or the second device 430 is a bank card, a debit card or a credit card and the other one of the first device 410 and the second device 430 is not a bank card, not a debit card and not a credit card.

In an embodiment, the key is a Personal Identification Number (PIN) of the user. More in particular, the key or PIN may be a security number coupled to a bank card, a debit card and/or a credit card and which must be kept secret by the user. By splitting the key or PIN into portions and storing them on several devices, it is not possible to steal the complete key or PIN when the first device 410 or the second device 430 is stolen.

In an embodiment, in line with a previously discussed embodiment, one of the first device 410 and the second device 430 is the master device of the body communication network 170. In this optional embodiment, the master device comprises a user interface comprising a display and an input means. The master device is configured to receive via the user interface the key from the user and the master device is configured to split the received key into the first portion KP1 of the key and the second portion KP2 of the key and to distribute via the body communication network 170 the respective portions KP1, KP2 to, respectively, the first device 410 and/or the second device 430 for storage in, respectively, the first key storage 420 and the second key storage 440.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A body coupled communication system (100, 200, 300, 400) providing security, the body coupled communication system (100, 200, 300, 400) comprising
- a first device (110, 210, 310, 410) comprising a first body coupled communication interface (114) for forming a body communication network (170) via a body transmission channel (160) following a body of a user (150) when the first body coupled communication interface (114) is in a direct vicinity of the body of the user (150),
- a second device (130, 230, 430) comprising a second body coupled communication interface (134) for forming the body communication network (170) with the first device (110, 210, 310, 410) via the body transmission channel (160) following the body of the user (150) when the second body coupled communication interface (134) is in the direct vicinity of the body of the user (150), the first body coupled communication interface (114) and the second body coupled communication interface (134) are configured to communicate information with each other via the body transmission channel (160),
wherein the direct vicinity is defined as a maximum distance at which, respectively, the first device (110, 210, 310, 410) and the second device (130, 230, 430) are capable of transmitting and/or receiving information via the body transmission channel (160), the maximum distance is a distance between the body of the user (150) and, respectively, the first body coupled communication interface (114) and the second body coupled communication interface (134), wherein the body coupled communication system (100, 200, 300, 400) is configured to provide additional security to the user (150) of the body coupled communication system (100, 200, 300, 400) to prevent misuse of the first device (110, 210, 310, 410) or the second device (130, 230, 430).

2. A body coupled communication system (100, 200, 300, 400) according to claim 1, wherein
- the first device (110, 210, 310, 410) being configured to detect, after the body communication network (170) being formed, whether the second device (130, 230, 430) is still present in the body communication network (170),
- the first device (110, 210, 310, 410) being configured to alarm the user (150) when it has been detected that the second device (130, 230, 430) is not anymore present in the body communication network (170).

3. A body coupled communication system (100, 200, 300, 400) according to any one of the claim 1 or 2, wherein
- the first device (110, 210, 310, 410) being configured to detect, after the body communication network (170) being formed, whether the first device (110, 210, 310, 410) is able to communicate via the body communication network (170),
- the first device (110, 210, 310, 410) being configured to alarm the user (150) when it has been detected that the first device (110, 210, 310, 410) is not anymore able to communicate via the body communication network (170).

4. A body coupled communication system (100, 200, 300, 400) according to claim 2 or 3, wherein
- the second device (130, 230, 430) being configured to detect, after the body communication network (170) being formed, whether the first device (110, 210, 310, 410) is still present in the body communication network (170), and the second device (130, 230, 430) being configured to alarm the user (150) when it has been detected that the first device (110, 210, 310, 410) is not anymore present in the body communication network (170),
and/or
- the second device (130, 230, 430) being configured to detect, after the body communication network (170) being formed, whether the second device (130, 230, 430) is able to communicate via the body communication network (170), and the second device (130, 230, 430) being configured to alarm the user (150) when it has been detected that the second device (130, 230, 430) is not anymore able to communicate via the body communication network (170).

5. A body coupled communication system (100, 200, 300, 400) according to any one of the claim 2, 3 or 4, wherein the first device (110, 210, 310, 410) and the second device (130, 230, 430) are configured to apply a polling protocol within the body communication network (170) for detecting whether one of the first device (110, 210, 310, 410) or the second device (130, 230, 430) is still present in the body communication network (170) and/or for detecting whether one of the first device (110, 210, 310, 410) or the second device (130, 230, 430) is still able to communicate via the body communication network (170).

6. A body coupled communication system (100, 200, 300, 400) according to claim 3 or 4, wherein the first device (110, 210, 310, 410) is configured to at least temporarily block its operation when it has been detected that the first device (110, 210, 310, 410) is not anymore able to communicate via the body communication network (170), and, when referring to claim 4, wherein each one of the first device (110, 210, 310, 410) and the second device (130, 230, 430) are configured to at least temporarily block its operation when it has been detected that the respective first device (110, 210, 310, 410) or second device (130, 230, 430) is not anymore able to communicate via the body communication network (170).

7. A body coupled communication system (100, 200, 300, 400) according to claim 1, wherein
- the first device (110, 210, 310, 410) comprises an additional communication interface (319) for communication with other devices (382, 384) in another network (380),
- the first device (110, 210, 310, 410) is configured to communicate with the second device (130, 230, 430) in the body communication network (170) and to communicate with other devices (382, 384) in the another network (380) via the additional communication interface (319),
- the second device (130, 230, 430) is configured to communicate only with devices of the body communication network (170).

8. A body coupled communication system (100, 200, 300, 400) according to claim 7, wherein the first device (110, 210, 310, 410) is configured to allow the second device (130, 230, 430) to communicate with the other devices (382, 384) in the another network (380) via the additional communication interface (319) and the second device (130, 230, 430) is configured to communicate with the other devices (382, 384) in the another network (380) via the first device (110, 210, 310, 410).

9. A body coupled communication system (100, 200, 300, 400) according to claim 1 further comprising
- a third device (460) comprising
- a third body coupled communication interface (464) for becoming a member of the body communication network (170) with the first device (110, 210, 310, 410) and the second device (130, 230, 430) when the third body coupled communication interface (464) is in the direct vicinity of the body of the user (150), the third body coupled communication interface (464) being configured to communicate information via the body transmission channel (160) with the first device (110, 210, 310, 410) and the second device (130, 230, 430),
- an authenticator (466) for authenticating the user (150) in dependence of a received key,
wherein
- the first device (110, 210, 310, 410) comprises a first key storage (420) for storing a first portion (KP1) of the key, and the first body coupled communication interface (114) is configured to transmit the first portion (KP1) of the key to the third device (460) when the first device (110, 210, 310, 410) and the third device (460) are a member of the body communication network (170),
- the second device (130, 230, 430) comprises a second key storage (440) for storing a second portion (KP2) of the key, and the second body coupled communication interface (134) is configured to transmit the second portion (KP2) of the key to the third device (460) when the second device (130, 230, 430) and the third device (460) are member of the body communication network (170),
- the authenticator (466) is configured to receive the first portion (KP1) and the second portion (KP2) of the key from the third body coupled communication interface (464) and to combine the received first portion (KP1) of the key with the received second portion (KP2) of the key.

10. A body coupled communication system (100, 200, 300, 400) according to claim 9, wherein the third device (460) is one of a payment terminal, cash dispenser, identity controlled access device, a computer, a computer network interface or a console.

11. A body coupled communication system (100, 200, 300, 400) according to claim 9, wherein one of the first device (110, 210, 310, 410) and the second device (130, 230, 430) is a bank card, a debit card or a credit card and another one of the first device (110, 210, 310, 410) and the second device (130, 230, 430) is not a bank card, is not a debit card and is not a credit card.

12. A body coupled communication system (100, 200, 300, 400) according to claim 9, wherein the key is a Personal Identification Number of the user (150).

13. A body coupled communication system (100, 200, 300, 400) according to any one of the preceding claims, wherein the first device (110, 210, 310, 410) and the second device (130, 230, 430) are configured to communicate with each other in a secure way when each one of the first device (110, 210, 310, 410) and the second device (130, 230, 430) comprises a correct encryption key for encrypting and decrypting the information being communicated between the first device (110, 210, 310, 410) and the second device (130, 230, 430).

14. A body coupled communication system (100, 200, 300, 400) according to any one of the preceding claims, wherein one of the devices of the first device (110, 210, 310, 410) and the second device (130, 230, 430) is a master device in the body communication network (170).

15. A body coupled communication system (100, 200, 300, 400) according to any one of the preceding claims, wherein each one of the first device (110, 210, 310, 410) and the second device (130, 230, 430) comprises an identity number storage (118, 138) for storing an identity value (ID1, ID2) belonging to, respectively, the first device (110, 210, 310, 410) and the second device (130, 230, 430), and wherein the identity value (ID1, ID2) is being used in the communication via the body communication network (170).
